(19) Europäisches Patentamt
European Patent Office
Office européen des brevets

(11) **EP 1 650 679 B1**

(12) **EUROPEAN PATENT SPECIFICATION**

(45) Date of publication and mention
of the grant of the patent:
**18.06.2008 Bulletin 2008/25**

(51) Int Cl.:
**G06F 17/30** (2006.01)

(21) Application number: **05256042.2**

(22) Date of filing: **28.09.2005**

(54) **System, device, method, program, and storage medium for human resources registration and retrieval**

System, Vorrichtung, Verfahren, Programm und computerlesbares Speichermedium um menschliche Arbeitskräfte zu verwalten

Système, dispositif, procédé, programme et support d'enregistrement pour la gestion des ressources humaines

(84) Designated Contracting States:
**DE FR GB**

(30) Priority: **21.10.2004 JP 2004307114**

(43) Date of publication of application:
**26.04.2006 Bulletin 2006/17**

(73) Proprietor: **Ricoh Company, Ltd.**
**Tokyo 143-8555 (JP)**

(72) Inventors:
• **Ikegami, Shiroh**
**Tokyo 173-0026 (JP)**
• **Mano, Hiroko**
**Tokyo 167-0034 (JP)**

(74) Representative: **Leeming, John Gerard**
**J.A. Kemp & Co.**
**14 South Square**
**Gray's Inn**
**London WC1R 5JJ (GB)**

(56) References cited:
WO-A-20/04044705          WO-A-20/04046875
US-A- 6 029 195           US-A1- 2002 046 224
US-A1- 2003 093 405       US-A1- 2003 149 580

**Description**

The present invention relates to a system, device, method, and program, for information registration and retrieval, and more particularly to a system, device, method, program, and storage medium for information registration and retrieval capable of using personal information of a searcher to effectively search for personnel satisfying a search condition on a network.

When a company starts a new business, it is necessary to gather personnel qualified for the new business. Those qualified personnel can be searched through organizations inside and outside the company. Conventionally, the search for the human resources information is conducted by a searcher through a database storing personal information including, for example, an individual name, an organization where to belong, contact information such as a telephone number, a job record, a specialty, and skills of each person to be searched for.

One example background human resources retrieval system uses the Internet and is specialized for a search of engineering personnel, for example. Such a human resources retrieval system includes an engineer database storing skills and conditions associated with registered engineers and a performance database storing information of performance history about each engineer. With this human resources retrieval system, a user who needs personnel information can execute a search and obtain information about a target profile of an engineer in real time. Such human resources retrieval system can manage an almost entire process beginning from interviewing and ending in contracting with qualified engineers. Thus, the human resources retrieval system satisfies the user as well as the engineers.

The above-described human resources retrieval system is suitable for a case of static and fixed information such as, for example, a name, an organization, and contact information such as a telephone number of each registered engineer. However, the system requires the registered engineers to update dynamic information such as, for example, the specialty and the job history of each registered engineer. Namely, maintaining and updating the information in the databases require a substantial amount of cost and an extra burden on each registered engineer.

Another example background human resources retrieval system is operable in a computer network environment. The human resources retrieval system includes a client system, a server system, and a personnel information database system. The client system sends a search condition specified by a searcher to the server system which previously stores document information created from resource documents originated by respective authors who are engineers, for example. Upon a receipt of the search condition, the server system retrieves author information from the document information based on the search condition. The server system then sorts the author information by author in association with the personnel information database system and produces a list of authors as a search result. Then, the server system sends the author list to the client system. When the search condition contains information about a particular person, the server system sends detailed information about this particular person to the client system. Thus, the dynamic information is handled without placing an extra burden on the engineer while the static information can easily be maintained in a way it has been.

There is a knowledge distribution system which serves yet another example background human resources retrieval system. The knowledge distribution system includes a first server having a first database and a second server having a second database. The first database stores information about businesses. The second database stores a plurality of technical papers such as research reports and technical reports prepared as technical documents by respective authors, i.e. the engineers. The first and second servers are connected to a network. A client computer is connected with the first and second servers via the network. The client computer sends a keyword or a search condition specified by a searcher for an idea relating to a business as a first keyword. The first server receives the first keyword. In the first server, the first database automatically picks up a second keyword corresponding to the first keyword, and sends the second keyword to the second server. When the second server receives the second keyword, the second database automatically picks up as a search result at least one document and its author based on the second keyword, and then sends the search result to the client computer. Thus, the document or the author Of the document can be retrieved.

US 6,029,195 relates to location of documents of interest to a user in which a target profile is created for each object in the data base to be searched and for each user. Object profiles are compared to user profiles to detect whether objects are of interest to the user.

WO 2004/046875 discloses an arrangement for notifying users of online services of other users also using those services.

According to the invention there is provided an information retrieval device, an information retrieval system, an information retrieval method and a computer program, each as defined in the appended claims. In one aspect of the present invention, the novel information retrieval system includes a client computer and an information retrieval device. The client computer and the information retrieval device are connected to a network. The client computer is configured to specify a search condition. The information retrieval device is configured to perform a search and to send a search result to the client computer.

The information retrieval device includes a profile database, a retriever, and an adjuster. The profile database is configured to store profiles. The retriever is configured to search the profile database for information in accordance with the search condition specified by the client computer. The adjuster is configured to adjust the information by referring to a profile of a searcher and profiles corresponding to the information stored in the profile database.

The search result sent to the client computer may include the information adjusted by the adjuster. The profile of the searcher may be stored in the profile database and externally entered.

The retrieval system may further include a document registration device connected to the network. The document registration device may include a document database configured to store documents accompanied by information of respective authors. The retriever may be configured to search the profile database and the document database for human resources information in accordance with the search condition specified by the client computer. The information may include information of authors corresponding to documents satisfying the search condition.

The document registration device may further include a profile creator configured to create a profile of an author from a document to be registered. The information retrieval device may further include a profile register configured to associate the profile created by the profile creator with the author and to register the associated profile into the profile database.

The client computer may include a profile creator configured to create a profile of an author from a document created by the client computer and to send the created profile to the information retrieval device. The information retrieval device may further include a profile register configured to associate the profile sent from the client computer with the author and to register the associated profile into the profile database.

The profile creator may create the profile of the author by extracting a keyword from the document to be registered. The adjuster may output the information adjusted by a plurality of adjustment methods.

The profile database may store information about acquaintance degrees, and the adjuster may output an acquaintance degree between personnel corresponding to the information and the searcher.

The adjuster may refer to the profile of the searcher and the profile of personnel corresponding to the information to calculate and output a knowledge sharing degree between the personnel and the searcher.

The client computer may include a display configured to display an element plotted by using a plurality of axes to show the information output by the adjuster. The display may show the information by changing a colour and a gradation of the element.

In one aspect of the present invention, the information retrieval device includes a profile creator and a profile register. The profile creator is configured to create a profile of an author from a document created by the author. The profile register is configured to associate the profile with the author created by the profile creator and to register the associated profile into the profile database.

The profile creator may create the profile of the author by extracting a keyword from the document.

In one aspect of the present invention, an information retrieval device for performing a search in accordance with a search condition includes a profile database, a retriever, and an adjuster. The profile database is configured to store profiles. The retriever is configured to search the profile database for information in accordance with the search condition. The adjuster is configured to adjust the information by referring to a profile of a searcher and profiles corresponding to the information stored in the profile database.

A search result retrieved by the retriever may include the information adjusted by the adjuster. The profile of the searcher may be stored in the profile database and externally entered.

The information retrieval device may further include a document database configured to store documents accompanied by information of respective authors. The retriever may be configured to search the profile database and the document database for information in accordance with the search condition. The information may include information of authors corresponding to documents satisfying the search condition.

In one aspect of the present invention, an information registration method registers information used for performing a search in accordance with a search condition into a profile database. The information registration method includes the steps of creating a profile of an author by using a keyword extracted from a document created by the author, associating the profile with the author, and registering the associated profile into the profile database.

In one aspect of the present invention, an information retrieval method for performing a search in accordance with a search condition includes the steps of storing profiles into a profile database, searching the profile database for information in accordance with the search condition, and adjusting the information by referring to a profile of a searcher and profiles corresponding to the information stored in the profile database.

In yet another aspect of the present invention, the information retrieval method for performing a search in accordance with a search condition includes the steps of storing profiles into a profile database, storing documents accompanied by information of respective authors into a document database, searching the document database for author information of a document satisfying the search condition as information, and adjusting the information by referring to a profile of a searcher and profiles corresponding to the information stored in the profile database.

In one aspect of the present invention, the novel computer program includes computer readable program code means for, when executed on a computer system, carrying out the information registration method or the information retrieval method including the steps described above.

A more complete appreciation of the invention and the many attendant advantages thereof will be readily obtained as the same becomes better understood by reference to the following detailed description of exemplary embodiments when considered in connection with the accompanying drawings, wherein:

FIG. 1 is a block diagram of a human resources retrieval system according to an exemplary embodiment of the present invention;
FIG. 2 is a lookup table containing information stored in a user database of the human resources retrieval system shown in FIG. 1;
FIG. 3 is a lookup table containing information stored in an organization database of the human resources retrieval system shown in FIG. 1;
FIG. 4 is a block diagram of a document registration server, a human resources retrieval server, and a client computer of the human resources retrieval system shown in FIG. 1;
FIG. 5 is an illustration of a document registration screen of the document registration server shown in FIG. 4;
FIG. 6 is a lookup table containing information stored in a document database of the document registration server shown in FIG. 4;
FIG. 7 is a lookup table containing information stored in an individual profile database of the human resources retrieval server shown in FIG. 4;
FIG. 8 is an illustration for explaining information stored in an acquaintance network database of the human resources retrieval server shown in FIG. 4;
FIG. 9 is a flowchart illustrating operations of a profile register of the human resources retrieval server shown in FIG. 4;
FIG. 10 is an illustration of a human resources search screen of the human resources retrieval server shown in FIG. 4;
FIG. 11 is a block diagram of a profile database and an adjuster of the human resources retrieval server shown in FIG. 4;
FIG. 12 is a flowchart illustrating operations of the profile database and the adjuster for calculating a knowledge sharing degree shown in FIG. 11;
FIG. 13 is a lookup table containing information in an integrated result produced by the adjuster shown in FIG. 11;
FIG. 14 is an illustration of a screen showing the information in the integrated result shown in FIG. 13 in accordance with a knowledge sharing degree;
FIG. 15 is an illustration of a screen showing the information in the integrated result shown in FIG. 13 in accordance with a co-author frequency;
FIG. 16 is an illustration of a screen showing the information in the integrated result shown in FIG. 13 in accordance with an acquaintance degree;
FIG. 17 is a block diagram of a document registration server, a human resources retrieval server, and a client computer of a human resources retrieval system according to another exemplary embodiment of the present invention;
FIG. 18 is a lookup table containing information in an integrated result produced by the human resources retrieval server shown in FIG. 17; and
FIG. 19 is a block diagram of the human resources retrieval system shown in FIG. 17 including a plurality of groups.

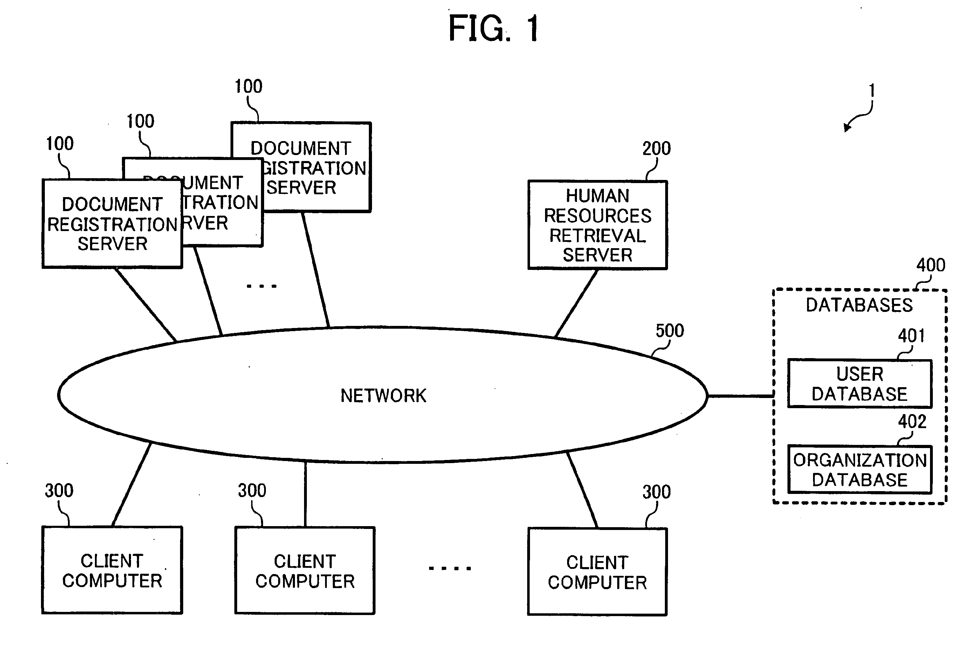

In describing preferred embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner. The invention is described below in the context of an exemplary application to the registration and retrieval of information relating to human resources. However, it is to be appreciated that the invention relates not to the specific informational content of the information processed but to the technical problem of efficiently and accurately storing and retrieving information.
Referring now to the drawings, wherein like reference numerals designate identical or corresponding parts throughout the several views, particularly to FIG. 1, a human resources retrieval system according to an exemplary embodiment of the present invention is explained.
As illustrated in FIG. 1, a human resources retrieval system 1 includes document registration servers 100, a human resources retrieval server 200, client computers 300, databases 400, and a network 500.
The databases 400 include a user database 401 and an organization database 4U2.
The human resources retrieval system 1 is configured to retrieve information about a person satisfying a search condition specified by the client computer 300 and to send a search result to the client computer 300. The document registration server 100 is configured to register and store a document created by the person. The client computer 300 is configured to send the search condition to the human resources retrieval server 200 and to receive human resources information about the person satisfying the search condition from the human resources retrieval server 200. The human resources retrieval server 200 is configured to retrieve the human resources information. The databases 400 are configured to store information about a user of the human resources retrieval system 1 and an organization the user belongs to. The network 500 is configured to connect the document registration servers 100, the human resources retrieval server 200, the client computers 300, and the databases 400 with each other.

The user database 401 is configured to store information about the user of the human resources retrieval system 1. The organization database 402 is configured to store information about the organization the user belongs to.

The document registration servers 100, the human resources retrieval server 200, the client computers 300, and the databases 400 are connected with each other via the network 500. Any number of the document registration servers 100 and the client computers 300 may be connected. However, only one human resources retrieval server 200 may be connected in the human resources retrieval system 1. The databases 400 are referred to in order to retrieve information about the user of the human resources retrieval system 1 and the organization the user belongs to.

Each of the document registration servers 100 stores a document created by an author to maintain and manage the document. The document registration server 100 extracts a profile of the author from the document sent from the client computer 300 and stored into the document registration server 100. The document registration server 100 requests the human resources retrieval server 200 to register the extracted profile into the human resources retrieval server 200. The author of the document or an administrator of the human resources retrieval system 1 sends a command to register, delete, or update the document to the document registration server 100.

The human resources retrieval server 200 retrieves human resources information in accordance with a command sent by the client computer 300. The human resources retrieval server 200 adjusts the retrieved information based on a profile of a searcher, and then sends the adjusted information to the client computer 300.

The document registration server 100 and the human resources retrieval server 200 function as web servers to communicate with the client computer 300. One computer may function as the document registration server 100 and the human resources retrieval server 200.

The client computer 300 generally includes a personal computer in which a web browser is operable. The personal computer may access the document registration server 100 via the network 500 by using the web browser. Thus, the personal computer may send a command to register, delete, or update the document to the document registration server 100, or a command to retrieve human resources information to the human resources retrieval server 200, and may receive and display the retrieved information. The client computer 300 may include a portable device such as a PDA (personal digital assistant) or a cellular phone if the above are satisfied.

The network 500 includes a transmission line for connecting the document registration servers 100, the human resources retrieval server 200, and the client computers 300. The network 500 generally includes a cable. TCP/IP (Transmission Control Protocol/Internet Protocol) and HTTP (Hyper Text Transfer Protocol) are used as communication protocols. The network 500 may further include any one of a wired network and a wireless network, for example, a LAN (Local Area Network) and a WAN (Wide Area Network), if a common communication protocol is used in the network.

According to exemplary embodiments described below, internal and external staff members who are authorized to use the human resources retrieval system 1 use the human resources retrieval system 1 of the present invention. The human resources retrieval system 1 is used to provide personnel information.

The user database 401 and the organization database 402 are managed by a system other than the human resources retrieval system 1.

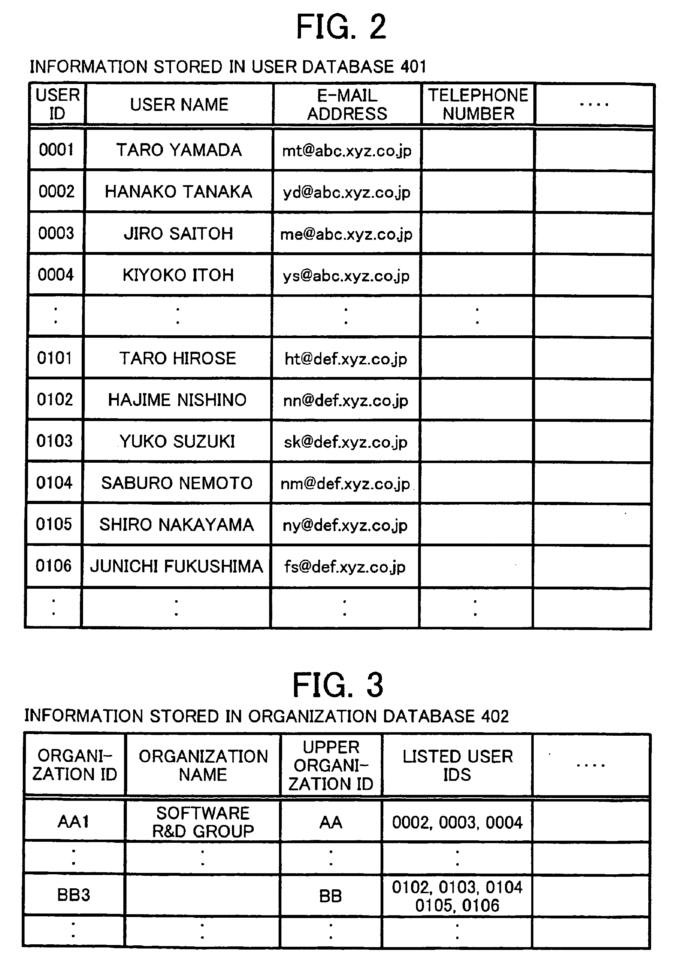

The user database 401 maintains and manages personnel information of the staff members and the like. As illustrated in FIG. 2, the user database 401 stores the personnel information. The stored personnel information includes a user ID for identifying a user, a user name, and a contact information such as an e-mail address and a telephone number, for example. The user database 401 is used to retrieve the user ID by the user name or the user name and the contact information by the user ID.

The organization database 402 maintains and manages information about a hierarchical structure of an organization the staff members belong to and the staff members belonging to the organization. The information is handled as personnel information. As illustrated in FIG. 3, the organization database 402 stores the information. The stored information includes an organization ID for identifying an organization, an organization name, an upper organization ID, and listed user IDs of the staff members belonging to the organization, for example. The organization database 402 is used to retrieve the organization name of an organization a user belongs to and acquaintances of the user by the user ID (i.e., an author or a co-author).

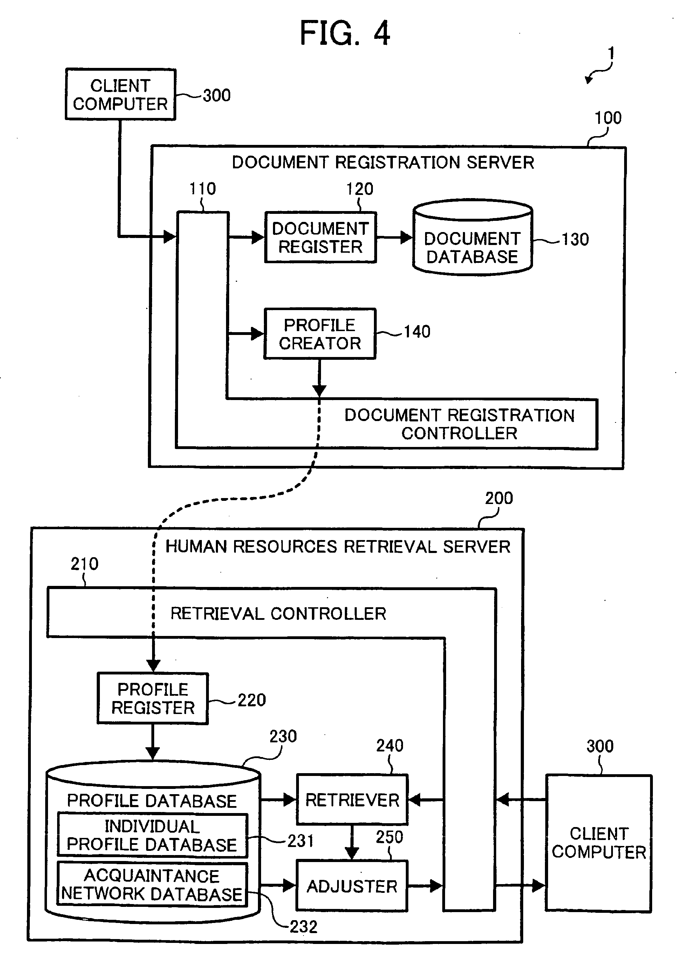

As illustrated in FIG. 4, the document registration server 100 includes a document registration controller 110, a document register 120, a document database 130, and a profile creator 140. The human resources retrieval server 200 includes a retrieval controller 210, a profile register 220, a profile database 230, a retriever 240, and an adjuster 250.

The profile database 230 includes an individual profile database 231 and an acquaintance network database 232.

The document registration controller 110 is configured to receive information for registering a document from the client computer 300 and to send the information to the document register 120 and the profile creator 140. The document register 120 is configured to add a document ID to the information and to send the information to the document database 130. The document database 130 is configured to store the information. The profile creator 140 is configured to extract keywords from the information to create a profile of the document and to send the profile to the human resources retrieval server 200. The retrieval controller 210 is configured to receive the profile and send the profile to the profile register 220. The profile register 220 is configured to create data to be registered into the profile database 230 based on the profile. The profile database 230 is configured to store the data. The retriever 240 is configured to search through the profile database 230 and retrieve human resources information. The adjuster 250 is configured to adjust the human resources information.

The individual profile database 231 is configured to store keywords and co-author frequencies for the author ID. The acquaintance network database 232 is configured to store a network connecting an author, a co-author, and staff members belonging to a common organization to the author.

Operations of the document database 130 for registering a document and the profile database 230 for registering a profile are explained below.

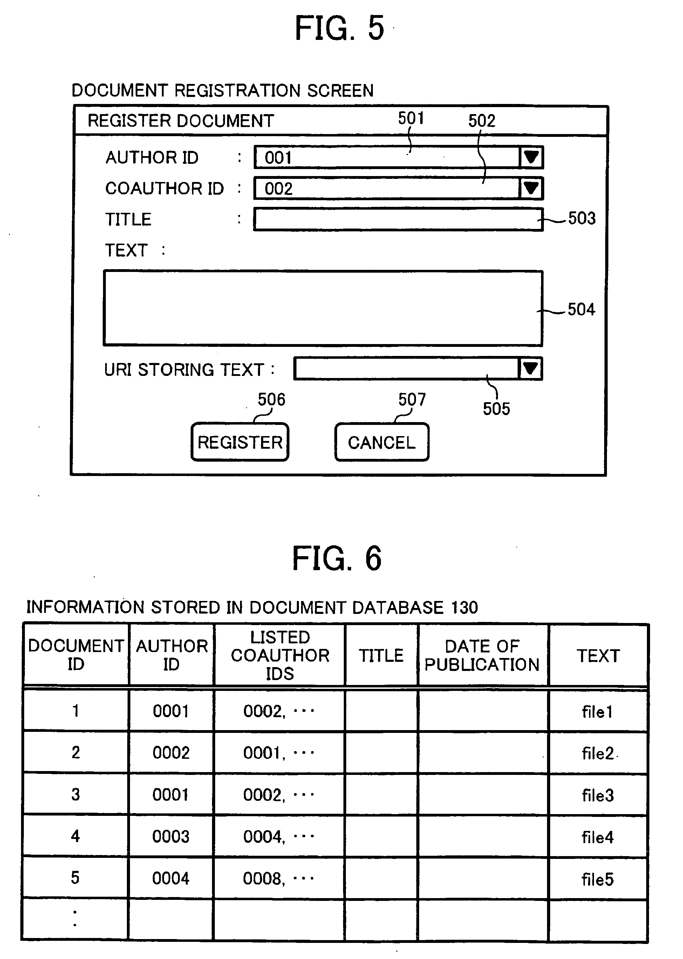

A user or an administrator who wants to register a document operates the client computer 300 to send a request to the document registration server 100 from the client computer 300. In the document registration server 100, the document registration controller 110 analyses the request. If the request asks to register the document, the document registration controller 110 starts the document register 120 to display a document registration screen illustrated in FIG. 5. In this case, the document registration server 100 having the web server function sends a web page for registering the document to the client computer 300. Thus, a web browser installed in the client computer 300 displays the document registration screen.

As illustrated in FIG. 5, the document registration screen includes input areas 501, 502, 503, 504, and 505, and buttons 506 and 507.

The input area 501 is used to enter a user ID of an author of the document to be registered. The user database 401 is browsed to select the user ID by a user name or an affiliation of the author. The input area 502 is used to enter a user ID of a co-author of the document to be registered. If there are a plurality of co-authors, all the co-authors are specified. If user IDs of the co-authors are unknown, the user database 401 is browsed to select the user IDs by user names or affiliations of the co-authors. The input area 503 is used to enter a title of the document to be registered. The input area 504 is used to enter a text of the document to be registered. If the text is registered in any other area, a URI (Uniform Resource Identifier) in which the document is registered, for example, a path to access the registered text, may be specified in the input area 505. The button 506 is used to register information specified on the document registration screen into the document database 130. The button 507 is used to cancel registering the information.

When the user or the administrator clicks the button 506 on the client computer 300, the information specified on the document registration screen is sent to the document registration server 100. In the document registration server 100, the document registration controller 110 receives the information, and then sends the received information to the document register 120 and the profile creator 140.

The document register 120 adds a new document ID to the received information and registers the information into the document database 130. As illustrated in FIG. 6, the document database 130 stores the information. The stored information includes a document ID, an author ID, listed co-author IDs, a title, a date of publication, and a text, for example. The document ID identifies the document. The date of publication indicates a date when the document is registered. The text indicates a file name or a URI where the text is stored, for example.

The profile creator 140 extracts keywords from the title and the URI by using a known technology. For example, compound words are selected. A number of appearances in the document of a word included in each of the compound words is counted. A score is given to the word to extract candidate keywords. The candidate keywords are sorted in descending order of the scores. A predetermined number of the words top-ranked are selected and listed as the keywords. The profile creator 140 sends the author ID, the listed co-author IDs, and the listed keywords to the human resources retrieval server 200 as a request for registering a profile.

In the human resources retrieval server 200, the retrieval controller 210 receives the request. The retrieval controller 210 starts the profile register 220 and sends the author ID, the listed co-author IDs, and the listed keywords to the profile register 220. The profile register 220 creates data to be registered into the profile database 230 based on the author ID, the listed co-author IDs, and the listed keywords received. The profile database 230 includes the individual profile database 231 and the acquaintance network database 232.

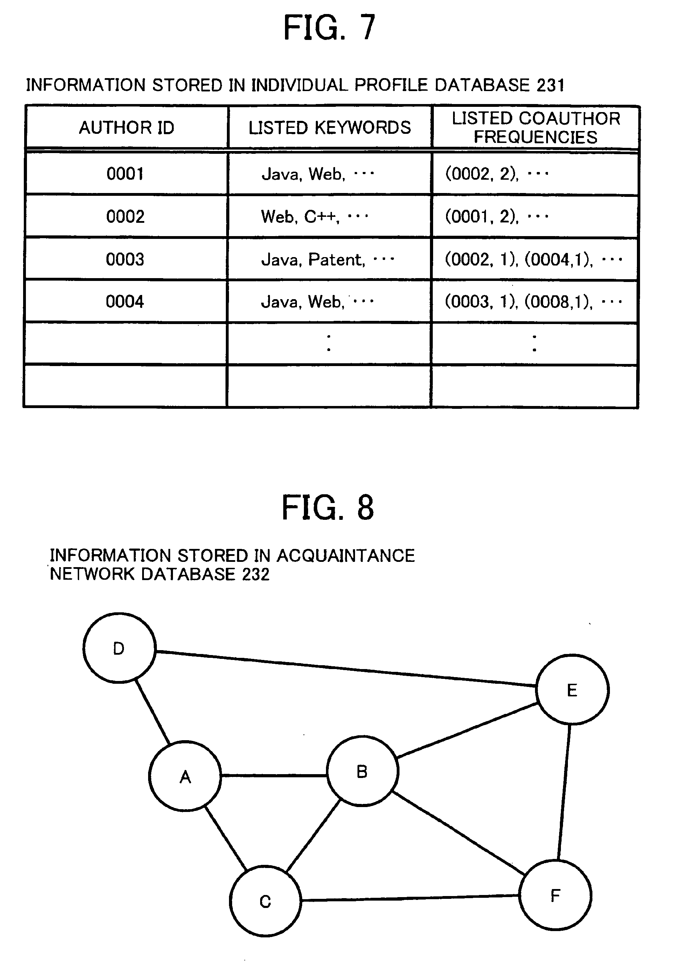

As illustrated in FIG. 7, the individual profile database 231 stores the data. The data includes an author ID, listed keywords, and listed co-author frequencies, for example. The author ID identifies the author of the document. The listed keywords include keywords extracted from the document. The listed co-author frequencies include combinations of the co-author ID and a frequency. The frequency indicates how many times the co-author has acted as a co-author for the author.

As illustrated in FIG. 8, the acquaintance network database 232 stores a network connecting the author, the co-author, and the staff members belonging to the common organization to the author. In the network, the author is acquainted with the co-author. The author is acquainted with the staff members belonging to the common organization.

The organization database 402 is referred to create a network (i.e., an initial state) in which the staff members belonging to the common organization (for example, a common section or a common project team) are acquainted with each other. As illustrated in FIG. 8, a staff member B is acquainted with staff members A, C, E, and F.

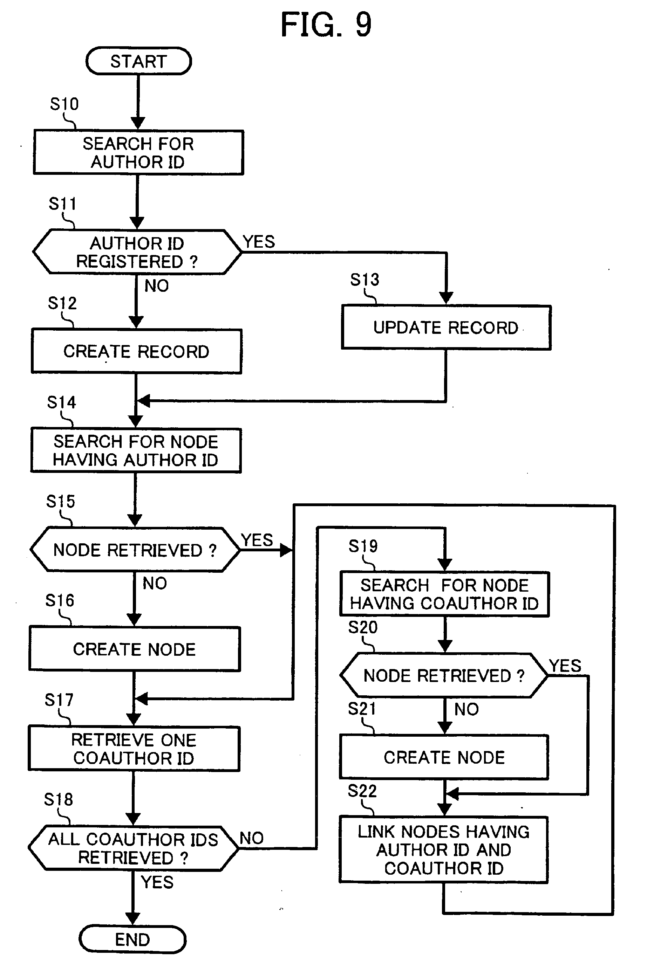

Referring to FIG. 9, operations of the profile register 220 are explained below. In a step S10, the individual profile database 231 is searched through to search for the received author ID. In a step S11, whether or not the author ID is registered in the individual profile database 231 is checked. If the author ID is not registered (i.e., if NO is selected in the step S11), a record for the author ID is newly created and stored together with the listed keywords and the listed co-author frequencies in a step S12. The listed keywords are stored in a state that the keywords do not overlap. To register the listed co-author frequencies, a different co-author ID is extracted to create and store a combination of the co-author ID and a frequency numbered with 1.

If the author ID is registered (i.e., if YES is selected in the step S11), the listed keywords are stored into a record for the retrieved author ID in a state that the keywords do not overlap. To register the listed co-author frequencies, a frequency is counted up by 1 for a common co-author ID. A frequency for a different co-author ID is numbered with 1. Thus, the combination of the co-author ID and the frequency is updated in a step S13.

In a step S14, the acquaintance network database 232 is searched through to search for a node having the author ID. If the node is not retrieved (i.e., if NO is selected in a step S15), a node having the author ID is created in a step S16. If the node is retrieved (i.e., if YES is selected in the step S15), one co-author ID is retrieved from the listed co-author IDs in a step S17. If all the co-author IDs are retrieved (i.e., if YES is selected in a step S18), the operations for profile registration are completed.

If all the co-author IDs are not retrieved (i.e., if NO is selected in the step S18), the acquaintance network database 232 is searched through to search for a node having a co-author ID in a step S19. If the node is not retrieved (i.e., if NO is selected in a step S20), a node having the co-author ID is created in a step S21. The node having the author ID is linked with the node having the co-author ID in a step S22. Then, the step 17 is repeated to retrieve a node having a next co-author ID. If the node is retrieved (i.e., if YES is selected in the step S20), the node having the author ID is linked with the node having the co-author ID in the step S22. Then, the step 17 is repeated to retrieve a node having the next co-author ID.

As described above, the profile of the user can be automatically extracted from the document the user created. In this case, the profile includes the listed keywords extracted from the document. Thus, the user can be free from extra workload.

Operations for searching for a person satisfying a search condition specified by a searcher are explained below.

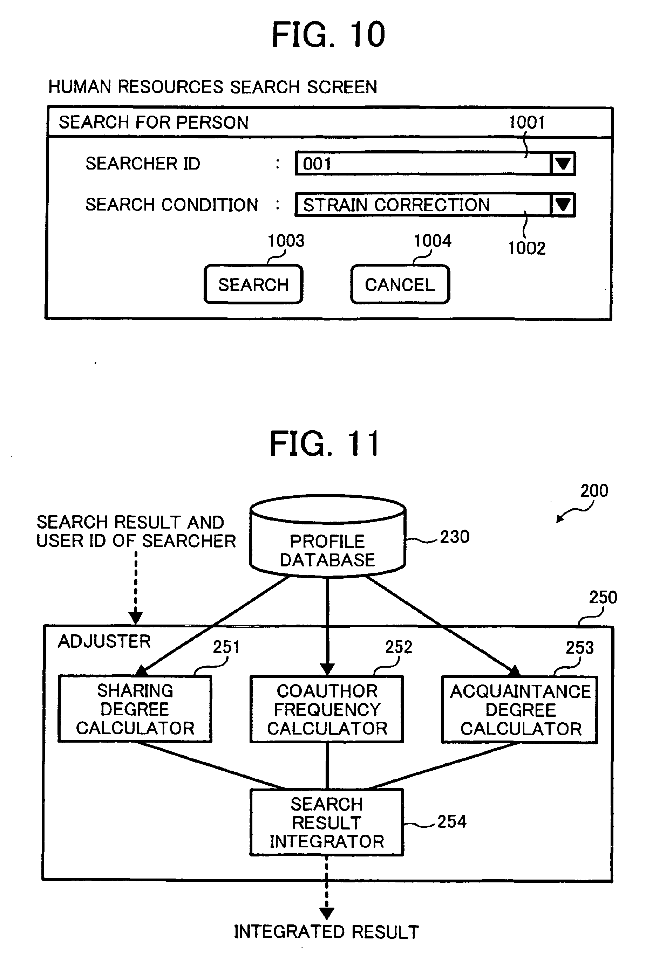

The searcher operates the client computer 300 to send a request to the human resources retrieval server 200 from the client computer 300. In the human resources retrieval server 200, the retrieval controller 210 analyses the request. If the request asks to search for the person, the retrieval controller 210 starts the retriever 240 to display a human resources search screen illustrated in FIG. 10. In this case, the human resources retrieval server 200 including the web server function sends a web page for searching for the person to the client computer 300. Thus, a web browser installed in the client computer 300 displays the human resources search screen.

As illustrated in FIG. 10, the human resources search screen includes input areas 1001 and 1002 and buttons 1003 and 1004.

The input area 1001 is used to enter a user ID of the searcher who searches for the person. The input area 1002 is used to enter the search condition for searching for the person. The button 1003 is used to start a search by using information specified on the human resources search screen. The button 1004 is used to cancel the search.

When the searcher clicks the button 1003 on the client computer 300, the information specified on the human resources search screen is sent to the human resources retrieval server 200. In the human resources retrieval server 200, the retrieval controller 210 receives the information, and then sends the received information to the retriever 240.

The retriever 240 refers to the listed keywords stored in the individual profile database 231 to search for author IDs satisfying the received search condition. The retriever 240 outputs listed author IDs as a search result. The search is performed by using a known technology.

An association degree with each author ID is calculated based on the search result so as to create a combination of the author ID and the association degree. The combinations are listed and temporarily stored.

Listed keywords for the authors included in the search result are extracted from documents created by the authors and co-authors. Therefore, the listed keywords include properties of the co-authors. The properties of the co-authors are excluded to calculate an association degree between the author and the search condition in accordance with an equation (1) below. $K_{id}$ represents the association degree between the author and the search condition.

$$K_{id} = mA + \Sigma_j \{n_j\} \quad \text{--------------------------------} \quad (1)$$

In the equation (1), $K_{id}$ represents the association degree when the author ID is id. m represents a number of the author whose author ID is id in the search result. m is either 0 or 1. A is a constant ranging from 0 to 1. $\Sigma_j$ represents a total number of frequencies of the co-author IDs for the author whose author ID is id in listed co-author frequencies of the authors included in the search result.

The retriever 240 starts the adjuster 250, and then sends the search result and the user ID of the searcher to the adjuster 250.

As illustrated in FIG. 11, the adjuster 250 includes a sharing degree calculator 251, a co-author frequency calculator 252, an acquaintance degree calculator 253, and a search result integrator 254.

The sharing degree calculator 251 is configured to calculate a knowledge sharing degree between the searcher and the author to create a combination of the author ID and the knowledge sharing degree. The co-author frequency calculator 252 is configured to calculate a co-author frequency between the searcher and the co-author to create a combination of the author ID and the co-author frequency. The acquaintance degree calculator 253 is configured to calculate an acquaintance degree between the searcher and the author to create a combination of the author ID and the acquaintance degree. The search result integrator 254 is configured to integrate the association degree, the knowledge sharing degree, the co-author frequency, and the acquaintance degree to create an integrated result.

According to the present embodiment, the knowledge sharing degree, the co-author frequency, and the acquaintance degree are used as indexes for adjustment. However, the other indexes may be added or replaced with the above indexes if the other indexes are useful for searching for the person.

The sharing degree calculator 251 compares a profile of the searcher with a profile retrieved per author ID in the search result. Thus, the sharing degree calculator 251 calculates the knowledge sharing degree, and temporarily stores the calculated knowledge sharing degree as the combination of the author ID and the knowledge sharing degree.

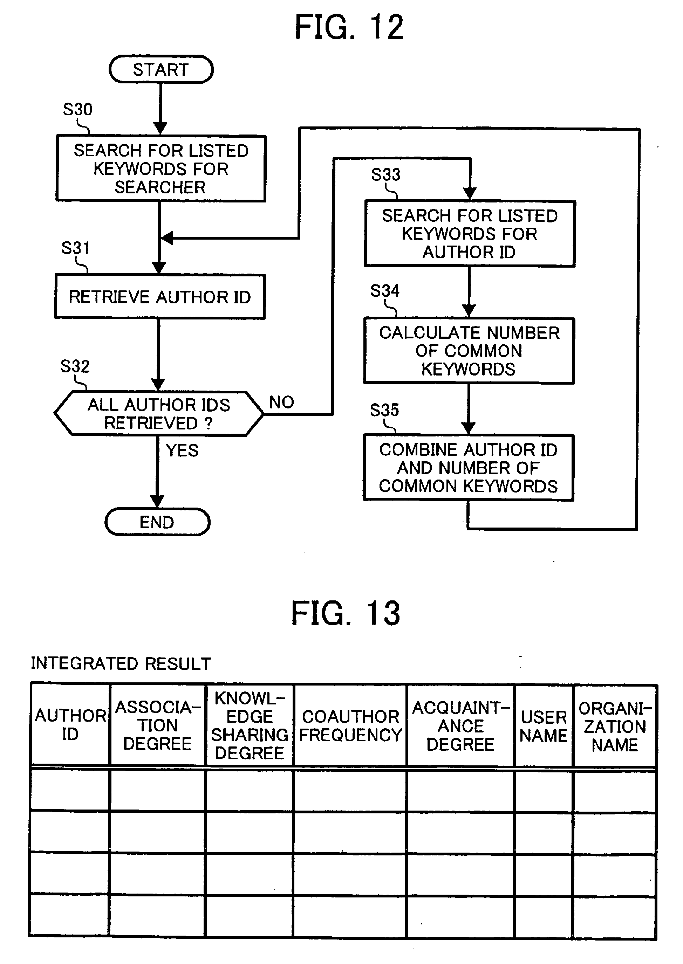

Referring to FIG. 12, processes for calculating the knowledge sharing degree are explained. According to the present embodiment, the listed keywords indicate the profile.

In a step S30, the individual profile database 231 is searched through to retrieve listed keywords corresponding to the user ID of the searcher. In a step S31, author IDs for which the combination of the author ID and the knowledge sharing degree is not created are retrieved from the search result output by the retriever 240. If the combination of the author ID and the knowledge sharing degree is created for all the author IDs retrieved in the step S31 (i.e., if YES is selected in a step S32), the sharing degree calculator 251 outputs listed combinations of the author ID and the knowledge sharing degree as a calculation result.

If there is an author ID for which the combination of the author ID and the knowledge sharing degree is not created (i.e., if NO is selected in the step S32), the individual profile database 231 is searched through to retrieve listed keywords corresponding to the author ID in a step S33. In a step S34, the listed keywords corresponding to the author ID are compared with the listed keywords corresponding to the user ID of the searcher to calculate a number of common keywords as the knowledge sharing degree. In a step S35, the combination of the author ID and the knowledge sharing degree is created and temporarily stored. The processes are repeated from the step S31.

The co-author frequency calculator 252 refers to the individual profile database 231 to retrieve listed co-author frequencies corresponding to the user ID of the searcher, and then stores the listed co-author frequencies retrieved. Thus, the co-author frequency calculator 252 calculates how many times the searcher has created documents together with each of the retrieved co-authors.

The acquaintance degree calculator 253 refers to the acquaintance network database 232 to find a route from a node having the user ID of the searcher to a node having the author ID retrieved by the retriever 240. The acquaintance degree calculator 253 calculates a number of nodes on the route (i.e., a number of hops) as the acquaintance degree. If there are a plurality of routes, a route having a fewest number of hops is selected. The fewest number of hops is defined as the acquaintance degree. The acquaintance degree calculator 253 calculates the acquaintance degree for each of the author IDs retrieved by the retriever 240 so as to create and temporarily store listed combinations of the author ID and the acquaintance degree.

The search result integrator 254 associates each of the author IDs with the association degree, the knowledge sharing degree, the co-author frequency, and the acquaintance degree respectively output by the retriever 240, the sharing degree calculator 251, the co-author frequency calculator 252, and the acquaintance degree calculator 253 so as to create an integrated result as illustrated in FIG. 13. The search result integrator 254 refers to the user database 401 to retrieve a user name corresponding to the author ID and adds the retrieved user name to the integrated result. The search result integrator 254 further refers to the organization database 402 to retrieve an organization name corresponding to the author ID and adds the retrieved organization name to the integrated result.

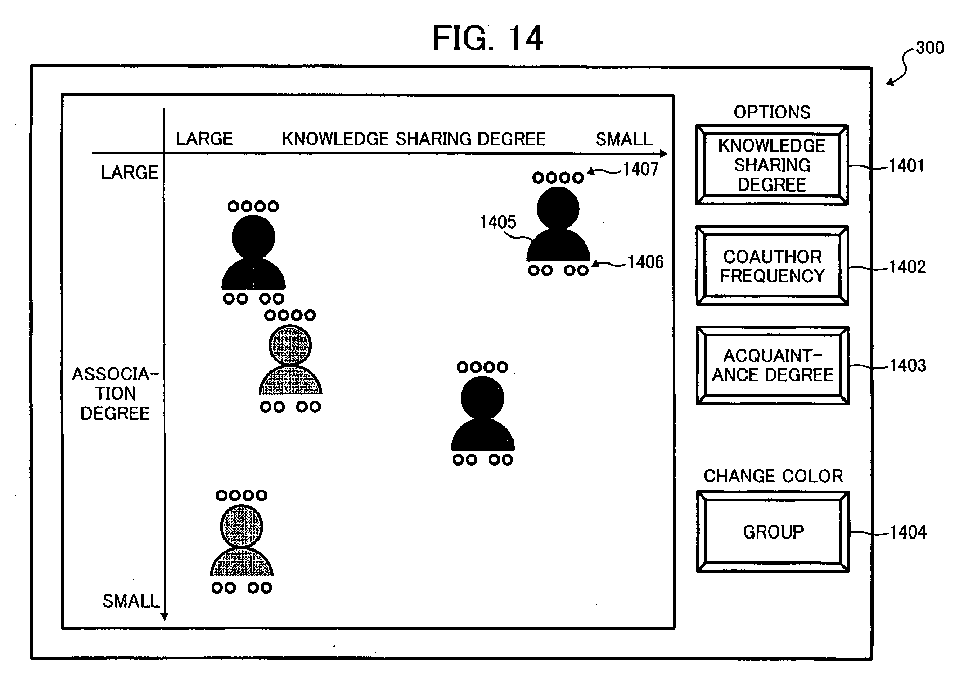

The integrated result is sent to the client computer 300 of the searcher so that the web browser displays the integrated result as illustrated in FIGS. 14 to 16.

As described above, it is possible to provide the indexes for adjusting the search result retrieved based on the search condition by using the profile of the searcher. Thus, optimum persons for the searcher can be retrieved from a plurality of points of view.

As illustrated in FIG. 14, the client computer 300 includes buttons 1401, 1402, 1403, and 1404, an icon 1405, and character strings 1406 and 1407.

The icon 1405 is configured to represent a person retrieved (i.e., an author). The character string 1406 is configured to represent an author name. The character sting 1407 is configured to represent an organization name the author belongs to. The button 1404 is used to change a colour of the icon 1405 per organization the author belongs to. The button 1401 is used to map the icon 1405 based on the knowledge sharing degree. The button 1402 is used to map the icon 1405 based on the co-author frequency. The button 1403 is used to map the icon 1405 based on the acquaintance degree.

The client computer 300 of the searcher displays the search result sent from the human resources retrieval server 200. Human resources information of the search result is mapped on a coordinate plate as illustrated in FIG. 14. A vertical axis represents the association degree. A horizontal axis represents a selected index (i.e., the knowledge sharing degree, the co-author frequency, or the acquaintance degree). On the horizontal axis, the degree is larger on the left and smaller on the right. On the vertical axis, the degree is larger on the top and smaller on the bottom.

When any one of the buttons 1401, 1402, and 1403 is clicked, the horizontal axis represents the index corresponding to the clicked button. The icon 1405 and the character strings 1406 and 1407 represent the human resources information. The colour of the icon 1405 is graded in accordance with a value of the index other than the index represented by the horizontal axis.

For example, when the horizontal axis represents the knowledge sharing degree as illustrated in FIG. 14, the icon 1405 is painted in light blue if the acquaintance degree is small and the icon 1405 is painted in deep blue if the acquaintance degree is large. The colour of the icon 1405 may be graded in accordance with the co-author frequency instead of the acquaintance degree.

When the button 1404 is clicked, authors in a same organization (i.e., group) are painted in a same colour. Thus, the colour of the icon 1405 differs depending on the organization and is graded in accordance with a value of the selected index.

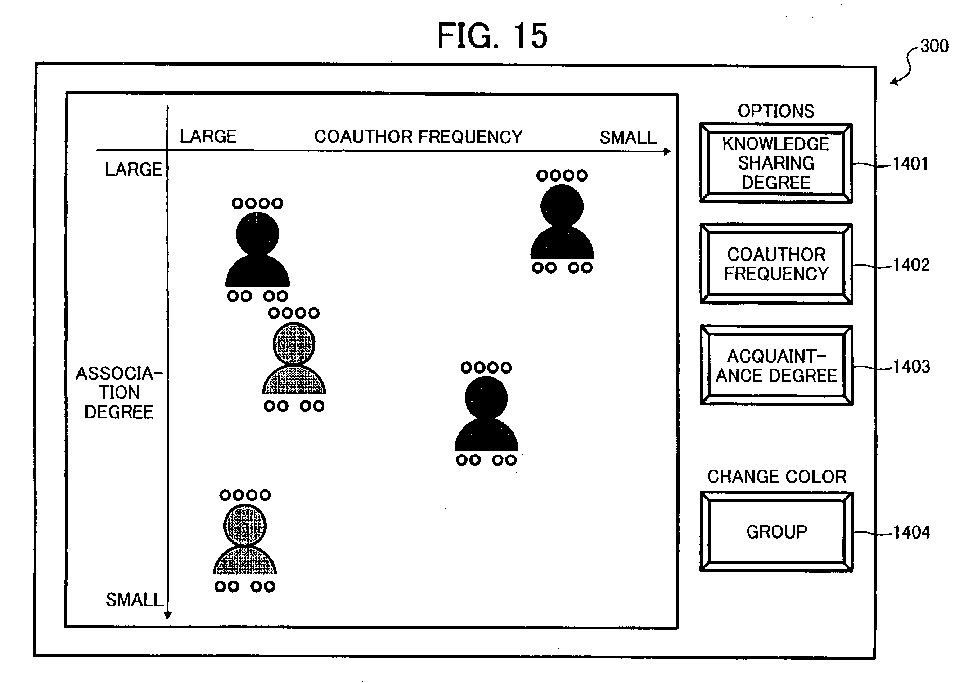

When the button 1402 is clicked, the knowledge sharing degree represented by the horizontal axis is cleared. Instead of the cleared knowledge sharing degree, the co-author frequency is represented by the horizontal axis. Simultaneously, mapping of the human resources information changes as illustrated in FIG. 15. The colour of the icon 1405 is cleared. The gradation of the colour of the icon 1405 is changed in accordance with a value of the knowledge sharing degree.

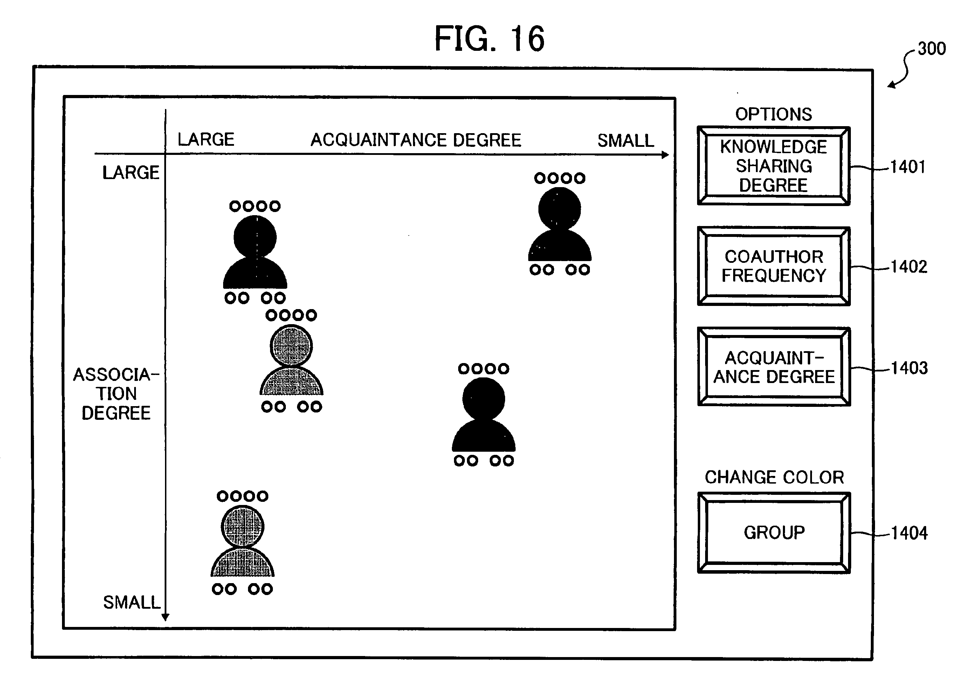

When the button 1403 is clicked, the co-author frequency represented by the horizontal axis is cleared. Instead of the cleared co-author frequency, the acquaintance degree is represented by the horizontal axis. Simultaneously, mapping of the human resources information changes as illustrated in FIG. 16. The colour of the icon 1405 is cleared. The gradation of the colour of the icon 1405 is changed in accordance with the value of the knowledge sharing degree.

When the icon 1405 is clicked, a user ID of a person represented by the icon 1405 may be sent to the document registration server 100. Thus, detailed information about the person, for example, an organization name, a user name, a contact information, a title of a document stored in the document database 130, and a URI of the document may be retrieved and displayed. When the title of the document is clicked, a text of the document may be retrieved from the URI of the document and displayed. The above operations can be carried out when programmed in advance in plug-in software of the web browser installed in the client computer 300.

As described above, the icon 1405 representing the retrieved person is plotted based on a plurality of indexes. The colour of the plotted icon 1405 is changed and graded. Thus, optimum persons for the searcher can be easily found.

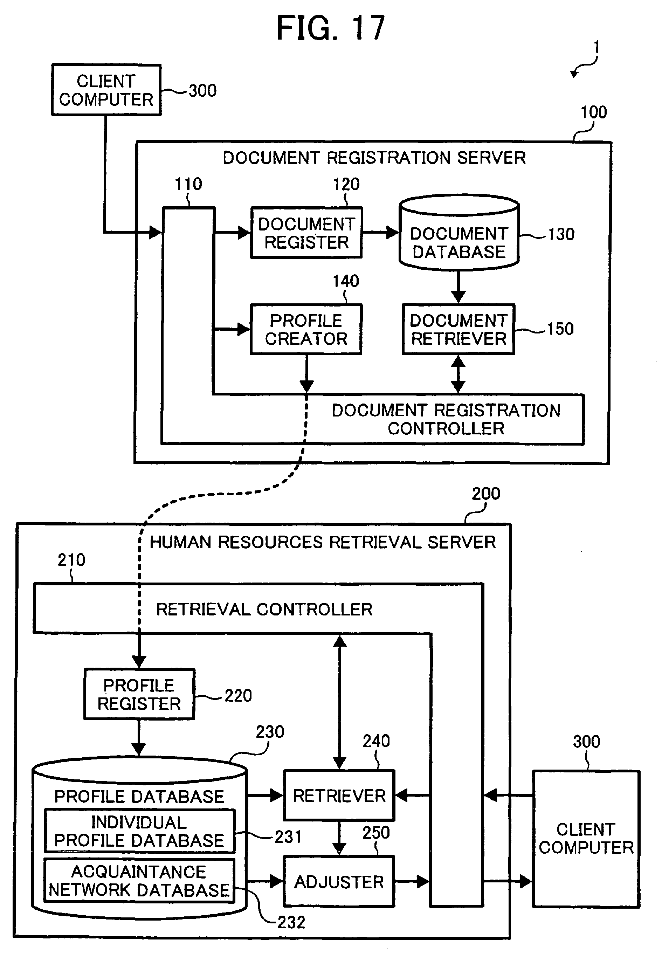

Referring to FIGS. 17 to 19, another exemplary embodiment of the present invention is explained. According to the previous embodiment, the profile database 230 is searched through to search for the person satisfying the search condition. The profile of the searcher is considered to adjust the search result. According to the present embodiment, however, the document database 130 is searched through to search for the person. The profile of the searcher is added to the search result.

As illustrated in FIG. 17, the human resources retrieval system 1 further includes a document retriever 150.

The document retriever 150 is configured to search through the document database 130 to retrieve documents satisfying a search condition.

Operations of the document database 130 for registering a document and the profile database 230 for registering a profile according to the present embodiment are similar to those according to the previous embodiment.

Operations of the document database 130 and the profile database 230 for searching for an optimum person for a searcher are explained below.

The searcher operates the client computer 300 to send a request to the human resources retrieval server 200 from the client computer 300. In the human resources retrieval server 200, the retrieval controller 210 analyses the request. If the request asks to search for a person, the retrieval controller 210 starts the retriever 240 to display the human resources search screen illustrated in FIG. 10. In this case, the human resources retrieval server 200 including the web server function sends a web page for searching for the person to the client computer 300. Thus, a web browser installed in the client computer 300 displays the human resources search screen.

The searcher specifies a user ID of the searcher and a search condition on the human resources search screen. When the searcher clicks the button 1003, information specified on the human resources search screen is sent to the human resources retrieval server 200. In the human resources retrieval server 200, the retrieval controller 210 sends the received information to the retriever 240. The retriever 240 sends the request for searching for the person with the search condition to all the document registration servers 100 connected to the human resources retrieval server 200 via the retrieval controller 210, and monitors replies.

In each of the document registration servers 100, the document registration controller 110 receives the request and the search condition, and starts the document retriever 150. The document retriever 150 searches through the document database 130 to search for documents satisfying the search condition by using a known technology, for example, ranking search. A score is calculated for each of the documents by using a following equation (2). The searched documents are ranked based on their scores. A predetermined number of top-ranked documents are retrieved. A combination of the document ID, the author ID, the listed co-author IDs, and the score is created for each of the retrieved documents. The combinations are listed and sent to the human resources retrieval server 200.

$$s = \Sigma_w \; s(w) \quad \text{............................................} \quad (2)$$

In the equation (2), s represents the score. w represents a search word specified as the search condition. s(w) represents the score of the search word. $\Sigma_w$ represents adding all the scores of the search words.

$$S(w) = tf(w) * (1 + \log_2 (N/df(w))) \quad \text{...............................} \quad (3)$$

In an equation (3), tf(w) represents a number of the search words appearing in the document. N represents a number of documents registered in the document database 130. df(w) represents a number of documents containing the search words which are stored in the document database 130.

When the retriever 240 receives search results from all the document registration servers 100, the retriever 240 combines the search results and calculates the number of documents and the association degree between the searcher and the author per author ID based on the combined search results to create combinations of the author ID, the number of documents, and the association degree. Then, the retriever 240 temporarily stores the combinations.

The combined search results are sorted by the author ID to calculate the number of documents per author ID. The documents retrieved in the search results are created by authors and co-authors. The scores of the documents include properties of the co-authors. The properties of the co-authors are excluded to calculate the association degree between the author and the search condition.

Documents corresponding to the author ID or the co-author ID that appears in the listed co-author IDs for the author ID are retrieved from the search results. A total value is calculated based on the score of each of the documents. Different values are assigned to the author and co-author. The association degree between the author and the search condition is calculated in accordance with an equation (4) below.

$$K_{ID} = \Sigma_j \; \{W_j * S_j / S_{max}\} \quad \text{..................................} \quad (4)$$

In the equation (4), $K_{ID}$ represents the association degree between the author and the search condition. $\Sigma_j$ represents adding values of documents having the user ID that appears as the author ID or in the listed co-author IDs for the retrieved documents. $S_j$ represents the score of a document $D_j$. $S_{max}$ represents a maximum score among the scores of the retrieved documents. $W_j$ represents a value which differs depending on whether the user ID represents the author or the co-author.

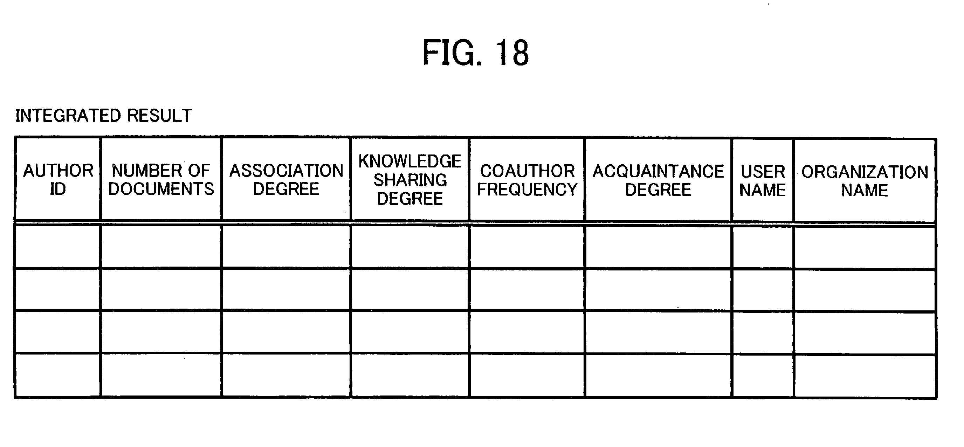

As illustrated in FIG. 18, the search result integrator 254 adds the number of documents to the integrated result according to the previous embodiment. The integrated result is sent to the client computer 300 so that the web browser displays the integrated result as illustrated in FIGS. 14 to 16.

The search result is displayed in a manner similar to that according to the previous embodiment. The number of documents may be added as another index. The colour of the icon 1405 may be graded based on the number of documents.

As described above, effects similar to the effects according to the previous embodiment can be obtained according to the present embodiment.

According to the previous embodiment, whenever a document is to be registered, the document registration server 100 extracts a profile of an author corresponding to the document. The profile is registered into the profile database 230 of the human resources retrieval server 200. However, the client computer 300 may include a local profile creator and register the profile into a local profile database in the client computer 300. In this case, the local profile creator may send information stored in the local profile database to the human resources retrieval server 200. In the human resources retrieval server 200, the profile register 220 may receive and register the information into the profile database 230.

The human resources retrieval server 200 may be connected with the client computers 300. The human resources retrieval server 200 may periodically access the local profile databases of the client computers 300 to combine information in the local profile databases and to create a profile database for the human resources retrieval server 200.

When a searcher searches for a person, the searcher may specify the local profile database as well as a user ID of the searcher and a search condition. Thus, the information stored in the local profile database may be sent to the human resources retrieval server 200 and used by the retriever 240 and the adjuster 250 as a profile of the searcher.

The profile may be created based on a predetermined format so that the profile may be extracted by the format as well as by the document. Thus, a user who does not create the document but has knowledge can use the human resources retrieval system 1 to search for a person.

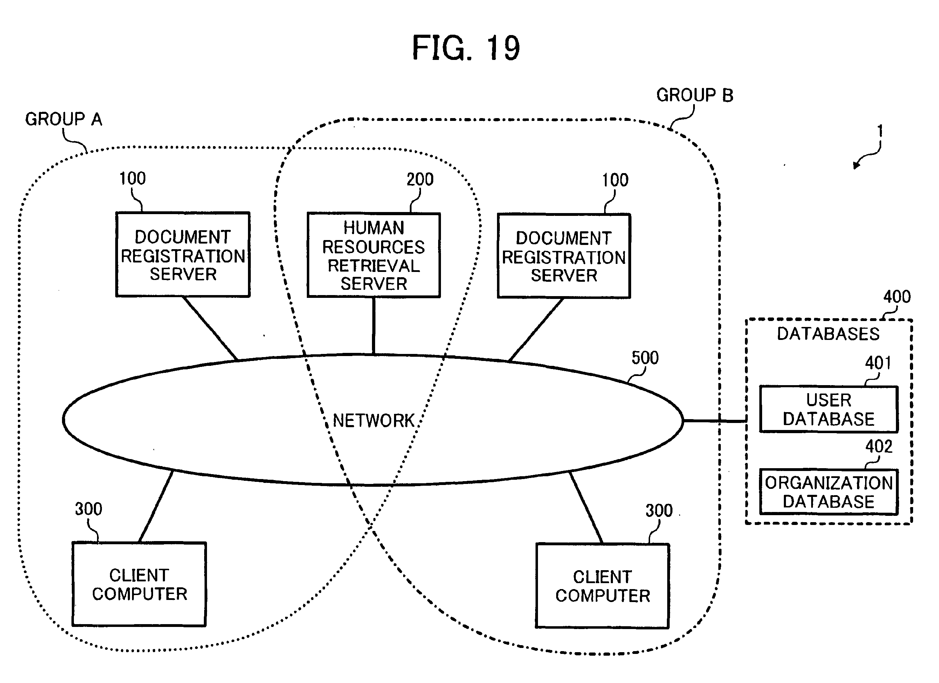

As illustrated in FIG. 19, a document created by a user belonging to a plurality of groups (i.e., groups A and B) may be stored into the document registration servers 100 of the groups A and B. Profiles corresponding to the document may be created in the document registration servers 100 of the groups A and B. The profiles may be stored into the profile database 230 of the human resources retrieval server 200 which is shared by the groups A and B.

The groups A and B may respectively have the document registration servers 100 or share the document registration server 100.

When the groups A and B share the profile database 230 of the human resources retrieval server 200, searchers in the groups A and B can search for a person in a manner similar to that according to the previous embodiment.

When the profile database 230 of the human resources retrieval server 200 is managed per group, for example, a searcher in the group A may search through the profile database 230 of the group B to search for a person in the group B. The searcher may specify a profile of the searcher in the profile database 230 of the group A. Thus, the search can be performed in a manner similar to that according to the previous embodiment.

In an electronic bulletin board system, a response message is submitted to a message posted on an electronic bulletin board. When the previous embodiment is applied to the electronic bulletin board system, information about a user (i.e., an author) who writes the response message obtained from the response message (for example, a response speed and a response frequency) can be added to a profile of the user. If the information is provided to a searcher, the searcher can judge whether the searcher can easily contact or communicate with the user.

If the authors of the message and the response message who belong to a certain thread know each other, information stored in the acquaintance network database 232 can be updated to add information obtained from the message and the response message. Thus, reliability in the acquaintance degree between the authors may improve.

The present invention is not limited to the details of the above embodiments. Functions of the devices used in the above embodiments are programmed and written onto a recording medium such as a CD-ROM (Compact Disc Read Only Memory). The CD-ROM is inserted into a medium driving device such as a CD-ROM drive provided in a computer, so that a program is installed and executed. Thus, the present invention may be practiced. In this case, the program read from the recording medium practices the above embodiments. Therefore, the program and the recording medium storing the program may practice the present invention.

The recording medium may include a semiconductor medium such as a ROM (Read Only Memory) and a non-volatile memory card, an optical medium such as a DVD (Digital Versatile Disc), an MO (Magnet-Optical) disc, an MD (Mini Disc), and a CD-R (Compact Disc Recordable), and a magnetic medium such as a magnetic tape and a flexible disc. The program stored in a recording device of a server may be supplied via a communication network such as the Internet. In this case, the recording device of the server may be included in the recording medium of the present invention.

The functions described in the above embodiments may be practiced by executing the loaded program. The functions may also be practiced in accordance with instructions of the program by using an operating system or other applications.

The program may be stored in the recording device such as a magnetic disc of the server. The program may be executed in accordance with instructions of a client computer connected via the communication network such as the Internet. A result obtained by executing the program may be sent to the client computer through a service provided by an application service provider. In this case, the recording device of the server and the program may practice the present invention.

The program providing the functions described in the above embodiments and the recording medium storing the program are distributed so that the program is installed into an inner or an outer recording device of the client computer. The installed program is executed to practice the functions described in the above embodiments, resulting in improvement in cost reduction, portability, and versatility.

The present invention has been described above with reference to specific embodiments. Note that the present invention is not limited to the details of the embodiments described above, but various modifications and improvements are possible without departing from the scope of the invention. It is therefore to be understood that within the scope of the appended claims, the present invention may be practiced otherwise than as specifically described herein. For example, elements and/or features of different illustrative embodiments may be combined with each other and/or substituted for each other within the scope of the appended claims.

The present application is based on and claims priority to Japanese patent application No. 2004-307114 filed on October 21, 2004 in the Japan Patent Office.

**Claims**

1. An information retrieval device (200) configured to receive from a client computer (300) a search condition specified by a searcher and to perform a search in response thereto, the information retrieval device (200) comprising:

   a profile database (230) configured to store profiles, each profile comprising information concerning a person;
   a retriever (240) configured to search the profile database (230) in accordance with the search condition specified by the client computer (300) to retrieve information relating to persons meeting the search condition; and
   an adjuster (250) configured to adjust the retrieved information by referring to a profile of the searcher;

   **characterised in that**:

   said adjuster (250) is arranged to calculate for each person meeting the search condition an index indicative of a relationship between the searcher and that person, the indices being added to the retrieved information.

2. An information retrieval device (200) according to Claim 1, wherein the profile of the searcher is stored in the profile database (230).

3. An information retrieval device (200) according to Claim 1, wherein the profile of the searcher is externally entered.

4. An information retrieval device (200) according to Claim 1 or 2 further comprising:

   a document registration device (100) comprising:

   a document database (130) configured to store documents accompanied by information of respective authors,

   wherein the retriever (240) is configured to search the profile database (230) and the document database (130) for information in accordance with the search condition, the information including information of authors corresponding to documents satisfying the search condition.

5. An information retrieval device (200) according to Claim 4, wherein the document registration device (100) further comprises:

   a profile creator (140) configured to create a profile of an author from a document to be registered, and wherein the information retrieval device (200) further comprises a profile register (220) configured to associate the profile created by the profile creator (140) with the author and to register the associated profile into the profile database (230).

6. An information retrieval device (200) according to any one of the preceding Claims, wherein the client computer (300) comprises a profile creator (140) configured to create a profile of an author from a document created by the client computer (300) and to send the created profile to the information retrieval device (200), and wherein the information retrieval device (200) further comprises a profile register (220) configured to associate the profile sent from the client computer (300) with the author and to register the associated profile into the profile database (230).

7. An information retrieval device (200) according to Claim 5 or 6, wherein the profile creator (140) creates the profile of the author by extracting a keyword from the document to be registered.

**8.** An information retrieval device (200) according to any one of the preceding Claims, wherein the adjuster (250) outputs the information adjusted by a plurality of adjustment methods.

**9.** An information retrieval device (200) according to any one of the preceding Claims, wherein the profile database (230) stores information about acquaintance degrees, and the adjuster (250) outputs an acquaintance degree between persons meeting the search condition and the searcher.

**10.** An information retrieval device (200) according to any one of the preceding Claims, wherein the adjuster refers to the profile of the searcher and the profiles of persons meeting the search condition to calculate and output a knowledge sharing degree between the persons meeting the search condition and the searcher.

**11.** An information retrieval device (100) according to any one of the preceding Claims, further comprising:

a profile creator (140) configured to create a profile of an author from a document created by the author; and
a profile register (220) configured to associate the profile created by the profile creator (140) with the author and to register the associated profile into the profile database (230).

**12.** The information retrieval device (100) according to Claim 11, wherein the profile creator (140) creates the profile of the author by extracting a keyword from the document.

**13.** An information retrieval system (1), comprising:

a client computer (300) connected to a network and configured to specify a search condition; and
an information retrieval device (200) according to any one of claims 1 to 12 connected to the network and configured to send the search result to the client computer.

**14.** An information retrieval system (1) according to Claim 13, wherein the client computer (300) comprises a display configured to display an element plotted by using a plurality of axes to show the information output by the adjuster (250).

**15.** An information retrieval system (1) according to Claim 14, wherein the display shows the information by changing a colour and a gradation of the element.

**16.** An information retrieval method for performing a search in accordance with a search condition, comprising the steps of:

storing profiles into a profile database (230), each profile comprising information concerning a person;
searching the profile database (230) for information relating to persons meeting the search condition; and
adjusting the information by referring to a profile of a searcher; **characterised in that** the step of adjusting comprises:

calculating for each person meeting the search condition an index indicative of a relationship between the searcher and that person, the indices being added to the retrieved information.

**17.** An information retrieval method according to claim 16, comprising the further steps of:

storing documents accompanied by information of respective authors into a document database (130);
searching the document database (130) for information of authors of documents satisfying the search condition.

**18.** A computer program comprising computer readable program code means that, when executed on a computer system, instruct the computer system to carry out a method according to any one of claims 16 or 17.

**Patentansprüche**

**1.** Informationswiedergewinnungsvorrichtung (200), die konfiguriert ist, um von einem Client-Computer (300) eine Suchbedingung zu empfangen, die durch einen Sucher spezifiziert wird, und um eine Suche in Reaktion hierauf auszuführen, wobei die Informationswiedergewinnungsvorrichtung (200) umfasst:

eine Profil-Datenbank (230), die konfiguriert ist, um Profile zu speichern, wobei jedes Profil Informationen bezüglich einer Person enthält;

eine Wiedergewinnungseinrichtung (240), die konfiguriert ist, um die Profil-Datenbank (230) in Übereinstimmung mit der durch den Client-Computer (300) spezifizierten Suchbedingung zu durchsuchen, um Informationen bezüglich Personen, die die Suchbedingung erfüllen, wiederzugewinnen; und

eine Anpassungseinrichtung (250), die konfiguriert ist, um die wiedergewonnenen Informationen durch Bezugnahme auf ein Profil des Suchers anzupassen;

**dadurch gekennzeichnet, dass**:

die Anpassungseinrichtung (250) ausgebildet ist, um für jede Person, die die Suchbedingung erfüllt, einen Index zu berechnen, der eine Beziehung zwischen dem Sucher und jener Person angibt, wobei die Indizes zu den wiedergewonnenen Informationen hinzugefügt werden.

2. Informationswiedergewinnungsvorrichtung (200) nach Anspruch 1, wobei das Profil des Suchers in der Profil-Datenbank (230) gespeichert wird.

3. Informationswiedergewinnungsvorrichtung (200) nach Anspruch 1, wobei das Profil des Suchers von außen eingegeben wird.

4. Informationswiedergewinnungsvorrichtung (200) nach Anspruch 1 oder 2, die ferner umfasst:

eine Dokumentregistrierungsvorrichtung (100), die umfasst:

eine Dokument-Datenbank (130), die konfiguriert ist, um Dokumente zu speichern, die von Informationen über jeweilige Autoren begleitet werden,

wobei die Wiedergewinnungseinrichtung (240) konfiguriert ist, um die Profil-Datenbank (230) und die Dokument-Datenbank (130) nach Informationen in Übereinstimmung mit der Suchbedingung zu durchsuchen, wobei die Informationen Informationen von Autoren, die die Suchbedingung erfüllenden Dokumenten entsprechen, enthalten.

5. Informationswiedergewinnungsvorrichtung (200) nach Anspruch 4, wobei die Dokumentregistrierungsvorrichtung (100) ferner umfasst:

eine Profil-Erzeugungseinrichtung (140), die konfiguriert ist, um ein Profil eines Autors aus einem zu registrierenden Dokument zu erzeugen, und

wobei die Informationswiedergewinnungsvorrichtung (200) ferner ein Profil-Register (220) enthält, das konfiguriert ist, um das durch die Profil-Erzeugungseinrichtung (140) erzeugte Profil dem Autor zuzuordnen und um das zugeordnete Profil in der Profil-Datenbank (230) zu registrieren.

6. Informationswiedergewinnungsvorrichtung (200) nach einem der vorhergehenden Ansprüche, wobei der Client-Computer (300) eine Profil-Erzeugungseinrichtung (140) umfasst, die konfiguriert ist, um ein Profil eines Autors aus einem durch den Client-Computer (300) erzeugten Dokument zu erzeugen und um das erzeugte Profil zu der Informationswiedergewinnungsvorrichtung (200) zu senden, und

wobei die Informationswiedergewinnungsvorrichtung (200) ferner ein Profil-Register (220) umfasst, das konfiguriert ist, um das von dem Client-Computer (300) gesendete Profil dem Autor zuzuordnen und um das zugeordnete Profil in der Profil-Datenbank (230) zu registrieren.

7. Informationswiedergewinnungsvorrichtung (200) nach den Ansprüchen 5 oder 6, wobei die Profil-Erzeugungseinrichtung (140) das Profil des Autors durch Extrahieren eines Schlüsselwortes aus dem zu registrierenden Dokument erzeugt.

8. Informationswiedergewinnungsvorrichtung (200) nach einem der vorhergehenden Ansprüche, wobei die Anpassungseinrichtung (250) die durch mehrere Einstellverfahren eingestellten Informationen ausgibt.

9. Informationswiedergewinnungsvorrichtung (200) nach einem der vorhergehenden Ansprüche, wobei die Profil-Datenbank (230) Informationen über Bekanntschaftsgrade speichert und die Anpassungseinrichtung (250) einen Bekanntschaftsgrad zwischen Personen, die die Suchbedingung erfüllen, und dem Sucher ausgibt.

10. Informationswiedergewinnungsvorrichtung (200) nach einem der vorhergehenden Ansprüche, wobei die Anpassungseinrichtung auf das Profil des Suchers und auf die Profile von Personen, die die Suchbedingung erfüllen, Bezug nimmt, um den Grad der gemeinsamen Nutzung von Wissen zwischen den die Suchbedingung erfüllenden Personen und dem Sucher zu berechnen und auszugeben.

11. Informationswiedergewinnungsvorrichtung (100) nach einem der vorhergehenden Ansprüche, die ferner umfasst:

    eine Profil-Erzeugungseinrichtung (140), die konfiguriert ist, um ein Profil eines Autors aus einem durch den Autor erzeugten Dokument zu erzeugen; und

    ein Profil-Register (220), das konfiguriert ist, um das durch die Profil-Erzeugungseinrichtung (140) erzeugte Profil dem Autor zuzuordnen und um das zugeordnete Profil in der Profil-Datenbank (230) zu registrieren.

12. Informationswiedergewinnungsvorrichtung (100) nach Anspruch 11, wobei die Profil-Erzeugungseinrichtung (140) das Profil des Autors durch Extrahieren eines Schlüsselwortes aus dem Dokument erzeugt.

13. Informationswiedergewinnungssystem (1), das umfasst:

    einen Client-Computer (300), der mit einem Netz verbunden ist und konfiguriert ist, um eine Suchbedingung zu spezifizieren; und

    eine Informationswiedergewinnungsvorrichtung (200) nach einem der Ansprüche 1 bis 12, die mit dem Netz verbunden ist und konfiguriert ist, um das Suchergebnis zu dem Client-Computer zu senden.

14. Informationswiedergewinnungssystem (1) nach Anspruch 13, wobei der Client-Computer (300) eine Anzeige aufweist, die konfiguriert ist, um ein unter Verwendung mehrerer Achsen gedrucktes Element anzuzeigen, um die durch die Anpassungseinrichtung (250) ausgegebenen Informationen anzuzeigen.

15. Informationswiedergewinnungssystem (1) nach Anspruch 14, wobei die Anzeige die Informationen durch Ändern einer Farbe und eines Farbtons des Elements zeigt.

16. Informationswiedergewinnungsverfahren zum Ausführen einer Suche in Übereinstimmung mit einer Suchbedingung, das die folgenden Schritte umfasst:

    Speichern von Profilen in eine Profil-Datenbank (230), wobei jedes Profil Informationen bezüglich einer Person enthält;

    Durchsuchen der Profil-Datenbank (230) nach Informationen bezüglich Personen, die die Suchbedingung erfüllen; und

    Anpassen der Informationen durch Bezugnahme auf ein Profil eines Suchers; **dadurch gekennzeichnet, dass** der Anpassungsschritt umfasst:

        Berechnen eines Indexes für jede die Suchbedingung erfüllende Person, wobei der Index eine Beziehung zwischen dem Sucher und jener Person angibt, wobei die Indizes zu den wiedergewonnenen Informationen hinzugefügt werden.

17. Informationswiedergewinnungsverfahren nach Anspruch 16, das ferner die folgenden Schritte umfasst:

    Speichern von Dokumenten, die von Informationen über jeweilige Autoren in einer Dokument-Datenbank (130) begleitet werden;

    Durchsuchen der Dokument-Datenbank (130) nach Informationen über Autoren von Dokumenten, die die Suchbedingung erfüllen.

18. Computerprogramm, das computerlesbare Programmcodemittel enthält, die dann, wenn sie auf einem Computersystem ausgeführt werden, das Computersystem anweisen, ein Verfahren nach einem der Ansprüche 16 oder 17 auszuführen.

**Revendications**

1. Dispositif de récupération d'informations (200) configuré pour recevoir d'un ordinateur client (300) une condition de recherche spécifiée par une personne qui effectue une recherche, et pour effectuer une recherche en réponse à celle-ci, le dispositif de récupération d'informations (200) comprenant :

une base de données de profils (230) configurée pour contenir des profils, chaque profil comprenant des informations relatives à une personne ;
un module de récupération (240) configuré pour effectuer une recherche dans la base de données de profils (230) en accord avec la condition de recherche spécifiée par l'ordinateur client (300) dans le but de récupérer des informations relatives à des personnes qui satisfont la condition de recherche ; et
un module d'ajustement (250) configuré pour ajuster les informations récupérées en faisant référence à un profil de la personne qui effectue une recherche ; **caractérisé en ce que** :

ledit module d'ajustement (250) est agencé pour calculer, pour chaque personne qui satisfait la condition de recherche, un indice représentatif d'une relation entre la personne qui effectue une recherche et cette personne, les indices étant ajoutés aux informations récupérées.

2. Dispositif de récupération d'informations (200) selon la revendication 1, dans lequel le profil de la personne qui effectue une recherche est enregistré dans la base de données de profils (230).

3. Dispositif de récupération d'informations (200) selon la revendication 1, dans lequel le profil de la personne qui effectue une recherche est entré depuis l'extérieur.

4. Dispositif de récupération d'informations (200) selon la revendication 1 ou 2, comprenant par ailleurs :

un dispositif d'enregistrement de documents (100) comprenant :

une base de données de documents (130) configurée pour contenir des documents accompagnés par des informations d'auteurs respectifs,

dans lequel le module de récupération (240) est configuré pour rechercher, dans la base de données de profils (230) et dans la base de données de documents (130), des informations en accord avec la condition de recherche, les informations comprenant des informations d'auteurs correspondant à des documents qui satisfont la condition de recherche.

5. Dispositif de récupération d'informations (200) selon la revendication 4, dans lequel le dispositif d'enregistrement de documents (100) comprend par ailleurs :

un module de création de profils (140) configuré pour créer un profil d'un auteur à partir d'un document devant être enregistré, et
dans lequel le dispositif de récupération d'informations (200) comprend par ailleurs un registre de profils (220) configuré pour associer le profil créé par le module de création de profils (140) à l'auteur, et pour enregistrer le profil associé dans la base de données de profils (230).

6. Dispositif de récupération d'informations (200) selon l'une quelconque des revendications précédentes, dans lequel l'ordinateur client (300) comprend un module de création de profils (140) configuré pour créer un profil d'un auteur à partir d'un document créé par l'ordinateur client (300) et pour envoyer le profil créé au dispositif de récupération d'informations (200), et
dans lequel le dispositif de récupération d'informations (200) comprend par ailleurs un registre de profils (220) configuré pour associer le profil envoyé depuis l'ordinateur client (300) à l'auteur, et pour enregistrer le profil associé dans la base de données de profils (230).

7. Dispositif de récupération d'informations (200) selon la revendication 5 ou 6, dans lequel le module de création de profils (140) crée le profil de l'auteur en extrayant un mot-clé du document devant être enregistré.

8. Dispositif de récupération d'informations (200) selon l'une quelconque des revendications précédentes, dans lequel le module d'ajustement (250) délivre en sortie les informations ajustées selon une pluralité de procédés d'ajustement.

9. Dispositif de récupération d'informations (200) selon l'une quelconque des revendications précédentes, dans lequel la base de données de profils (230) contient des informations relatives à des degrés de connaissance, et le module d'ajustement (250) délivre en sortie un degré de connaissance entre des personnes qui satisfont la condition de recherche et la personne qui effectue une recherche.

**10.** Dispositif de récupération d'informations (200) selon l'une quelconque des revendications précédentes, dans lequel le module d'ajustement fait référence au profil de la personne qui effectue une recherche et aux profils de personnes qui satisfont la condition de recherche afin de calculer et de délivrer en sortie un degré de partage de connaissances entre les personnes qui satisfont la condition de recherche et la personne qui effectue une recherche.

**11.** Dispositif de récupération d'informations (200) selon l'une quelconque des revendications précédentes, comprenant par ailleurs :

un module de création de profil (140) configuré pour créer un profil d'un auteur à partir d'un document créé par l'auteur ; et
un registre de profils (220) configuré pour associer le profil créé par le module de création de profils (140) à l'auteur, et pour enregistrer le profil associé dans la base de données de profils (230).

**12.** Dispositif de récupération d'informations (200) selon la revendication 11, dans lequel le module de création de profils (140) crée le profil de l'auteur en extrayant un mot-clé du document.

**13.** Système de récupération d'informations (1), comprenant :

un ordinateur client (300) connecté à un réseau et configuré pour spécifier une condition de recherche ; et
un dispositif de récupération d'informations (200) selon l'une quelconque des revendications 1 à 12 connecté au réseau et configuré pour envoyer le résultat de la recherche à l'ordinateur client.

**14.** Système de récupération d'informations (1) selon la revendication 13, dans lequel l'ordinateur client (300) comprend un afficheur configuré pour afficher un élément représenté de manière graphique en utilisant une pluralité d'axes de façon à montrer les informations délivrées en sortie par le module d'ajustement (250).

**15.** Système de récupération d'informations (1) selon la revendication 14, dans lequel l'afficheur montre les informations en changeant une couleur et une gradation de l'élément.

**16.** Procédé de récupération d'informations servant à effectuer une recherche en accord avec une condition de recherche, le procédé comprenant les étapes consistant à :

enregistrer des profils dans une base de données de profils (230), chaque profil comprenant des informations relatives à une personne ;
rechercher, dans la base de données de profils (230), des informations relatives à des personnes qui satisfont la condition de recherche ; et
ajuster les informations en faisant référence à un profil d'une personne qui effectue une recherche ; **caractérisé en ce que** l'étape d'ajustement comprend l'étape consistant à :

calculer, pour chaque personne qui satisfait la condition de recherche, un indice, représentatif d'une relation entre la personne qui effectue une recherche et cette personne, les indices étant ajoutés aux informations récupérées.

**17.** Procédé de récupération d'informations selon la revendication 16, comprenant par ailleurs les étapes consistant à :

enregistrer des documents accompagnés par des informations d'auteurs respectifs dans une base de données de documents (130) ;
rechercher, dans la base de données de documents (130), des informations relatives à des auteurs de documents qui satisfont la condition de recherche.

**18.** Programme d'ordinateur comprenant un moyen de code de programme lisible par un ordinateur qui, quand il est exécuté sur un système informatique, commande au système informatique de mettre en oeuvre un procédé selon l'une quelconque des revendications 16 ou 17.

# FIG. 1

EP 1 650 679 B1

# FIG. 2

INFORMATION STORED IN USER DATABASE 401

| USER ID | USER NAME | E-MAIL ADDRESS | TELEPHONE NUMBER | . . . . |
|---------|-----------|----------------|------------------|---------|
| 0001 | TARO YAMADA | mt@abc.xyz.co.jp | | |
| 0002 | HANAKO TANAKA | yd@abc.xyz.co.jp | | |
| 0003 | JIRO SAITOH | me@abc.xyz.co.jp | | |
| 0004 | KIYOKO ITOH | ys@abc.xyz.co.jp | | |
| : | : | : | : | |
| 0101 | TARO HIROSE | ht@def.xyz.co.jp | | |
| 0102 | HAJIME NISHINO | nn@def.xyz.co.jp | | |
| 0103 | YUKO SUZUKI | sk@def.xyz.co.jp | | |
| 0104 | SABURO NEMOTO | nm@def.xyz.co.jp | | |
| 0105 | SHIRO NAKAYAMA | ny@def.xyz.co.jp | | |
| 0106 | JUNICHI FUKUSHIMA | fs@def.xyz.co.jp | | |
| : | : | : | : | |

# FIG. 3

INFORMATION STORED IN ORGANIZATION DATABASE 402

| ORGANI-ZATION ID | ORGANIZATION NAME | UPPER ORGANI-ZATION ID | LISTED USER IDS | . . . . |
|------------------|-------------------|------------------------|-----------------|---------|
| AA1 | SOFTWARE R&D GROUP | AA | 0002, 0003, 0004 | |
| : | : | : | : | |
| BB3 | | BB | 0102, 0103, 0104 0105, 0106 | |
| : | : | : | : | |

# FIG. 4

```
CLIENT
COMPUTER          300
```

1

100

## DOCUMENT REGISTRATION SERVER

110

120

```
DOCUMENT
REGISTER
```

```
DOCUMENT
DATABASE
```
130

```
PROFILE
CREATOR
```
140

```
DOCUMENT REGISTRATION
CONTROLLER
```

200

## HUMAN RESOURCES RETRIEVAL SERVER

210

```
RETRIEVAL CONTROLLER
```

```
PROFILE
REGISTER
```
220

230

240

```
PROFILE DATABASE

INDIVIDUAL
PROFILE DATABASE         231

ACQUAINTANCE
NETWORK DATABASE

232
```

```
RETRIEVER
```

250

```
ADJUSTER
```

300

```
CLIENT
COMPUTER
```

# FIG. 5

DOCUMENT REGISTRATION SCREEN

| REGISTER DOCUMENT | 501 | 502 |
|---|---|---|

AUTHOR ID : [ 001 ] ▼

COAUTHOR ID : [ 002 ] ▼

TITLE : [                    ] ~503

TEXT :

[                    ] ~504

URI STORING TEXT : [                ] ▼

506    507    505

[ REGISTER ]    [ CANCEL ]

# FIG. 6

INFORMATION STORED IN DOCUMENT DATABASE 130

| DOCUMENT ID | AUTHOR ID | LISTED COAUTHOR IDS | TITLE | DATE OF PUBLICATION | TEXT |
|---|---|---|---|---|---|
| 1 | 0001 | 0002, ··· | | | file1 |
| 2 | 0002 | 0001, ··· | | | file2 |
| 3 | 0001 | 0002, ··· | | | file3 |
| 4 | 0003 | 0004, ··· | | | file4 |
| 5 | 0004 | 0008, ··· | | | file5 |
| ⋮ | | | | | |

21

# FIG. 7

INFORMATION STORED IN INDIVIDUAL PROFILE DATABASE 231

| AUTHOR ID | LISTED KEYWORDS | LISTED COAUTHOR FREQUENCIES |
|---|---|---|
| 0001 | Java, Web, ··· | (0002, 2), ··· |
| 0002 | Web, C++, ··· | (0001, 2), ··· |
| 0003 | Java, Patent, ··· | (0002, 1), (0004,1), ··· |
| 0004 | Java, Web, ··· | (0003, 1), (0008,1), ··· |
| | · | · |
| | | |

# FIG. 8

INFORMATION STORED IN ACQUAINTANCE
NETWORK DATABASE 232

# FIG. 9

START

S10
SEARCH FOR
AUTHOR ID

S11
AUTHOR ID
REGISTERED ? —— YES

NO

S13
UPDATE RECORD

S12
CREATE RECORD

S14
SEARCH FOR NODE
HAVING AUTHOR ID

S15
NODE RETRIEVED ? —— YES

NO

S19
SEARCH FOR NODE
HAVING COAUTHOR ID

S16
CREATE NODE

S20
NODE RETRIEVED ? —— YES

NO

S21
CREATE NODE

S17
RETRIEVE ONE
COAUTHOR ID

S18
ALL COAUTHOR IDS
RETRIEVED ? —— NO

YES

S22
LINK NODES HAVING
AUTHOR ID AND
COAUTHOR ID

END

# FIG. 10

HUMAN RESOURCES SEARCH SCREEN

SEARCH FOR PERSON            1001

SEARCHER ID     :   [001 ▼]

SEARCH CONDITION   :   [STRAIN CORRECTION ▼]

1003           1004       1002

[ SEARCH ]       [ CANCEL ]

# FIG. 11

200

SEARCH RESULT AND
USER ID OF SEARCHER

PROFILE
DATABASE    ~230

250

ADJUSTER

251        252        253

| SHARING DEGREE CALCULATOR | COAUTHOR FREQUENCY CALCULATOR | ACQUAINTANCE DEGREE CALCULATOR |

SEARCH RESULT INTEGRATOR  ~254

INTEGRATED RESULT

# FIG. 12

```
              START
S30             │
                ▼
        SEARCH FOR LISTED
        KEYWORDS FOR
        SEARCHER
                                        S33
                                              SEARCH FOR LISTED
S31             │                             KEYWORDS FOR
                ▼                             AUTHOR ID
        RETRIEVE AUTHOR ID          S34            │
                                                   ▼
                                            CALCULATE NUMBER
S32             │                           OF COMMON
                ▼                           KEYWORDS
        ALL AUTHOR IDS    NO       S35            │
        RETRIEVED ?                                ▼
                │                           COMBINE AUTHOR ID
              YES                           AND NUMBER OF
                │                           COMMON KEYWORDS
                ▼
              END
```

# FIG. 13

INTEGRATED RESULT

| AUTHOR ID | ASSOCIA-TION DEGREE | KNOWL-EDGE SHARING DEGREE | COAUTHOR FREQUENCY | ACQUAINT-ANCE DEGREE | USER NAME | ORGANI-ZATION NAME |
|---|---|---|---|---|---|---|
|  |  |  |  |  |  |  |
|  |  |  |  |  |  |  |
|  |  |  |  |  |  |  |
|  |  |  |  |  |  |  |

# FIG. 14

# FIG. 15

# FIG. 16

# FIG. 17

# FIG. 18

INTEGRATED RESULT

| AUTHOR ID | NUMBER OF DOCUMENTS | ASSOCIATION DEGREE | KNOWLEDGE SHARING DEGREE | COAUTHOR FREQUENCY | ACQUAINTANCE DEGREE | USER NAME | ORGANIZATION NAME |
|---|---|---|---|---|---|---|---|
|  |  |  |  |  |  |  |  |
|  |  |  |  |  |  |  |  |
|  |  |  |  |  |  |  |  |
|  |  |  |  |  |  |  |  |

EP 1 650 679 B1

FIG. 19

DATABASES 400

USER DATABASE 401

ORGANIZATION DATABASE 402

GROUP B

DOCUMENT REGISTRATION SERVER 100

HUMAN RESOURCES RETRIEVAL SERVER 200

NETWORK 500

CLIENT COMPUTER 300

GROUP A

DOCUMENT REGISTRATION SERVER 100

CLIENT COMPUTER 300

**EP 1 650 679 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6029195 A
- WO 2004046875 A
- JP 2004307114 A